(19) Europäisches Patentamt

European Patent Office

Office européen des brevets

(11) Veröffentlichungsnummer : **0 310 640 B1**

(12) **EUROPÄISCHE PATENTSCHRIFT**

(51) Int. Cl.⁵ : **G02B 13/00,** G02B 23/24

(45) Veröffentlichungstag der Patentschrift :
**05.08.92 Patentblatt 92/32**

(21) Anmeldenummer : **88902834.6**

(22) Anmeldetag : **17.03.88**

(86) Internationale Anmeldenummer :
**PCT/EP88/00218**

(87) Internationale Veröffentlichungsnummer :
**WO 88/07218 22.09.88 Gazette 88/21**

(54) **RELAISLINSENSYSTEM.**

(30) Priorität : **19.03.87 DE 3709021**

(43) Veröffentlichungstag der Anmeldung :
**12.04.89 Patentblatt 89/15**

(45) Bekanntmachung des Hinweises auf die
Patenterteilung :
**05.08.92 Patentblatt 92/32**

(84) Benannte Vertragsstaaten :
**AT BE CH DE FR GB IT LI LU NL SE**

(56) Entgegenhaltungen :
**DD-A- 216 621**
**DE-A- 3 535 028**
**DE-A- 3 625 023**
**GB-A- 954 629**

(73) Patentinhaber : **MED Inventio AG**
**Seestrasse 359**
**CH-8038 Zürich-Wollishofen (CH)**

(72) Erfinder : **HEIMBECK, Hans-Jörg**
**Rorschacherstrasse 270**
**CH-9016 St. Gallen (CH)**

(74) Vertreter : **Münich, Wilhelm, Dr. et al**
**Kanzlei Münich, Steinmann, Schiller**
**Willibaldstrasse 36/38**
**W-8000 München 21 (DE)**

EP 0 310 640 B1

## Beschreibung

### Technisches Gebiet

Die Erfindung bezieht sich auf ein Relaislinsensystem mit zwei Stablinsen-Elementen und zwei weiteren optischen Elementen, die jeweils symmetrisch zu einer Mittelebene angeordnet sind, wobei die Mittelebene zwischen einer Objektebene und einer Bildebene liegt.

### Stand der Technik

Derartige Relaislinsensysteme, die auch als Bildübertragungssysteme bezeichnet werden, werden insbesondere für Endoskope, aber auch für andere Sehrohre, wie Technoskope, Cystoskope, Periskope oder dgl verwendet. Im folgenden wird deshalb ohne Beschränkung der allgemeinen Anwendbarkeit als "Oberbegriff" die Bezeichnung "Endoskop" verwendet.

Die Verwendung von Stablinsen-Elementen ist erstmals von Prof Hopkins vorgeschlagen worden (GB-PS 954 629): Gemäß dem grundsätzlichen Vorschlag von Prof Hopkins besteht jedes Relaislinsensystem, d. h. jedes Linsensystem, das das von einem Endoskopobjektiv erzeugte Bild zum nächsten Relaislinsensystem oder zum Okular überträgt, aus zwei bikonvexen stabförmigen Linsen und wenigstens zwei weiteren Meniskuslinsen. Durch die Kombination von stabförmigen bikonvexen Linsen mit Meniskuslinsen läßt sich - wie Prof Hopkins erkannt hat - zum einen eine große Bildhelligkeit erzielen, zum anderen lassen sich die bei Relaislinsensystemen störenden Bildfehler - Astigmatismus und Bildfeldkrümmung - hinreichend gut kompensieren.

Ausgehend von den Arbeiten von Prof Hopkins sind in der Folge eine Vielzahl von abgewandelten Relaislinsensystemen in der Patentliteratur beschrieben worden, bei denen ebenfalls stabförmige Linsenelemente verwendet werden. Nur beispielhaft sollen die DE-AS 25 54 952, die DE-PS 26 19 393, die DE-OS 35 34 210 und die DE-OS 35 35 028 genannt werden.

Die in diesen Druckschriften beschriebenen Relaislinsen-bzw. Bildübertragungssysteme sind im Vergleich zu dem grundlegenden Vorschlag von Prof Hopkins vgl. kompliziert aufgebaut mit dem Ziel, eine verbesserte Korrektur der Abbildungsfehler zu erreichen:

So ist in der DE-AS 25 54 952 vorgeschlagen worden, als Relaislinsen Kittglieder zu verwenden und zwischen die Feldlinsen und die Relaislinsen planparallele Platten einzubringen. Hierdurch wird nicht nur die Zahl der erforderlichen optischen Elemente erhöht, sondern auch der mechanische Aufbau des Endoskops aufwendiger, da sämtliche optischen Elemente durch Luftabstände getrennt sind.

In der DE-PS 26 19 393 ist beschrieben, in jedem Relaislinsensystem insgesamt vier Stablinsen, die zum Teil aus Kittgliedern bestehen und eine Fluidlinse einzusetzen. Es Bedarf keiner näheren Erläuterung, daß ein derartiger Aufbau zu hohen Herstellkosten führt.

In der DE-OS 35 34 210 werden ebenfalls zusätzlich zu den bikonvexen Stablinsen "dicke" Meniskuslinsen verwendet und entweder die Stablinsen oder die dicken Meniskuslinsen als Kittglieder ausgeführt.

Gemäß dem von den zitierten Druckschriften jüngsten Vorschlag, der DE-OS 35 35 028, weist jede Relaislinsengruppe sogar 5 Linsenglieder auf, die noch dazu zum Teil als Kittglieder ausgeführt sind.

Bei keinem dieser neueren Vorschläge steht jedoch die erzielte Verbesserung der Abbildungsqualität und der Bildhelligkeit in einem vernünftigen Verhältnis zum erhöhten Herstellungsaufwand.

Ferner sind in einer Reihe von Druckschriften Maßnahmen diskutiert worden, um bei gegebenem Durchmesser des Endoskops bzw. des Sehrohrs die für den Strahlengang zur Verfügung stehende Querschnittsfläche und damit die Bildhelligkeit zu erhöhen. Der diesen Druckschriften entnehmbare gemeinsame Grundgedanke besteht darin, Abstandshalten zwischen allen Linsen ¨uberflüssig zu machen, um so auch die von den Abstandshaltern eingenommene Querschnittsfläche für das Strahlbündel verfügbar zu machen.

In der DE-AS 23 05 473 ist deshalb der Vorschlag enthalten, das oder die Relaislinsensysteme des Endoskops so zu gestalten, daß für die gesamten Bildumkehrungen oder wenigstens für jede einzelne Bildumkehrung nur maximal zwei Luft/Glasflächen vorhanden sind. Eine derartige Gestaltung der Relaislinsensysteme erfordert jedoch eine Vielzahl von Kittflächen, so daß die Herstellkosten entsprechend hoch sind.

In der DE-AS 25 56 717 ist angeregt, sämtliche Flächen des Relaislinsensystems aneinander anliegen zu lassen, so daß das Linsensystem nur noch an den beiden äußeren Flächen am Außenrohr festgelegt werden muß. Nachteilig hieran ist jedoch, daß bei auf das Endoskop wirkenden Biegekräften, die in der Praxis unvermeidbar sind, die Linsenflächen gegeneinander bewegt werden und damit verkratzen können

### Darstellung der Erfindung

Der Erfindung liegt die Aufgabe zugrunde, ein Relais-bzw. ein Bildübertragungssystem für ein Endoskop

2

oder dgl anzugeben, das bei geringem Herstellaufwand und sehr gut korrigierten Bildfehlern ein helles Bild liefert.

Eine erfindungsgemäße Lösung dieser Aufgabe ist mit ihren Weiterbildungen in den Patentansprüchen gekennzeichnet.

Überraschenderweise gelingt eine Lösung dieser Aufgabe dadurch, daß von einem "einfachen" Relaislinsensystem gemäß dem Oberbegriff des Patentanspruchs 1 ausgegangen und dieses Linsensystem dadurch weitergebildet wird, daß die Stablinsen-Elemente konvex/konkave Einzellinsen sind, deren konkave FLächen jeweils der Mittelebene zugekehrt sind, daß die weiteren Elemente bikonvexe Einzellinsen sind, und daß die konkaven FLächen der Stablinsen-Elemente mit jeweils einer der konvexen Flächen der weiteren optischen Elemente verkittet sind.

Die Erfindung bricht jedoch mit dem seit dem Anmeldetag der GB-PS 954 629 durchgängig verwendeten Grundaufbau von Bildübertragungssystemen, bei denen bikonvexe Stablinsen verwendet worden sind Erfindungsgemäß werden erstmals konvex/konkave Stablinsen eingesetzt, die mit bikonvexen Linsen verkittet sind Die bikonvexen Linsen sind bei dem erfindungsgemäßen Relaislinsen- bzw. Bildübertragungssystem im optischen Sinne keine dicken Linsen.

Durch diesen neuartigen Grundaufbau gelingt eine hervorragende Korrektur des Astigmatismus und der Bildfeldkrümmung bereits mit einem vergleichsweise einfach aufgebauten Linsensystem, das lediglich vier Linsen aufweist.

Eine Stablinse mit einer konkaven Fläche ist zwar bereits aus der DD-PS 216 621 bekannt; das aus dieser Druckschrift bekannte Umkehrsystem weist aber einen völlig anderen Aufbau auf, bei dem die konkave Fläche gegen Luft gerichtet und nicht auf der Seite der weiteren Linse angeordnet ist. Darüberhinaus ist dort offensichtlich die zwischen Stablinse und Feldlinse, in der die Zwischenabbildung erfolgt, gebildete Luftlinse von wesentlicher Bedeutung für die Korrektur der Bildfehler. Bei dem erfindungsgemäßen Relaislinsensystem erfolgt dagegen die Zwischenabbildung in Luft, so daß derartige Luftlinsen keine Rolle spielen.

Weiterbildungen der Erfindung sind in den Unteransprüchen angegeben:

Durch die im Anspruch 2 angegebenen Maßnahmen gelingt eine hervorragende Farbfehlerkorrektur, die ein wesentliches Merkmal der Erfindung darstellt.

Gemäß Anspruch 3 ist vorgesehen, daß die bikonvexen Linsen im Bereich ihres Flächenscheitels aufeinander aufliegen bzw. einen sehr kleinen Abstand haben:

Hierdurch ist es möglich, auf Abstandshalter oder andere Befestigungselemente im Bereich der Symmetrieebene des Linsensystems, die auch Blendenebene ist, zu verzichten, so daß man eine größere für den Strahl verfügbare Querschnittsfläche und damit ein helleres Bild erhält. Da im Gegensatz zu dem aus der DE-AS 25 56 717 bekannten Stand der Technik nur eine Glasauflage in der Blendenebene, nicht jedoch auch im Bereich der Objekt-und Bildebene vorgesehen ist, stören Kratzer, wie sie durch unvermeidbare Biegebeanspruchungen des Endoskops entstehen können, bei der erfindungsgemäßen Lösung weit weniger als beim Stand der Technik Trotzdem erhält man - da der Durchmesser des zu übertragenden Bilds in der Regel kleiner ist als der verfügbare Endoskopdurchmesser - die gleichen Vorteile, nämlich ein helleres Bild aufgrund höherer Lichtstärke.

Die gemäß Anspruch 4 vorgesehene planparallele Glasplatte verbessert die Bildfehlerkorrektur weiter und erlaubt eine Wellenfrontkorrektur, ohne daß - wie beim Stand der Technik - zwischen sämtlichen Linsen planparallele Platten vorgesehen werden müßten. Von besonderem Vorteil ist wiederum die vorgesehene Glasauflage, da durch sie Abstandshalter oder sonstige Befestigungselemente überflüssig werden und damit die Bildhelligkeit erhöht wird.

Der neuartige erfindungsgemäße Aufbau mit konvex/konkaven Stablinsen erlaubt Korrekturstrategien, die von den bekannten Strategien völlig abweichen, und eröffnet Möglichkeiten, die mit herkömmlichen Linsensystemen nicht erreichbar sind.

Dies zeigt exemplarisch die im Anspruch 5 angegebene Korrektur-Bedingung, deren Einhaltung insbesondere für die Korrektur der Bildfeldkrümmung von Bedeutung ist, und die der in der DE-OS 35 34 210 aufgestellten Bedingung entgegenläuft.

Auch die im Anspruch 6 angegebene Bedingung verbessert die Korrektur der Bildfeldkrümmung weiter.

Die im Anspruch 1 angegebenen erfindungsgemäßen Maßnahmen erlauben insbesondere die Verwendung von Gläsern mit hoher Brechzahl und geringem Brechzahlunterschied (Anspruch 7), so daß ein helles Bild erzielbar ist.

Vor allem aber ist es durch die erfindungsgemäße Ausbildung des Linsensystems möglich, Gläser mit einem großen Unterschied der Abbe'schen Zahlen zu verwenden, so daß das erfindungsgemäße Linsensystem eine hervorragende Korrektur der Farbfehler aufweist.

Kurze Beschreibung der Zeichnung

Die Erfindung wird nachstehend anhand von Ausführungsbeispielen unter Bezugnahme auf die Zeichnung näher beschrieben, deren einzige Figur einen teilweisen Linsenschnitt durch ein erfindungsgemäßes Relaislinsensystem zeigt.

Darstellung von Ausführungsbeispielen

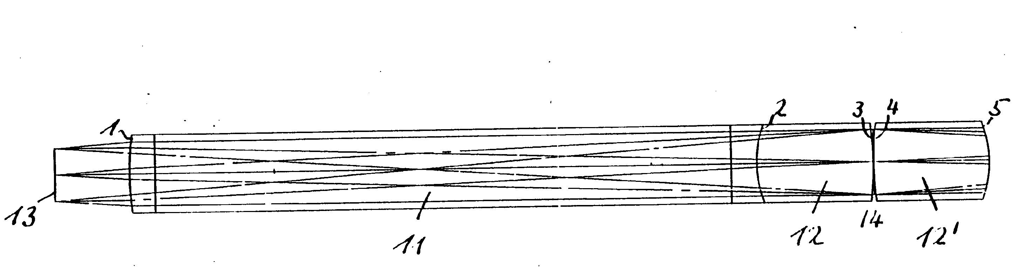

Das erfindungsgemäße Linsensystem weist zwei konvex/konkave Stablinsen 11, von denen nur die objektseitige dargestellt ist, und zwei bikonvexe Linsen 12 und 12′ auf, die ein von einem nicht dargestellten Endoskopobjektiv oder einem gleichartig ausgebildeten Relaislinsensystem erzeugtes Bild 13 im Maßstab 1:(-)1 auf eine nicht dargestellte Bildebene abbilden.

Die Numerierung der einzelnen Flächen der Linsen ist der Zeichnung zu entnehmen und für nicht dargestellte Flächen entsprechend fortzusetzen.

In den folgenden Tabellen 1 bis 4 sind für vier Ausführungsbeispiele der Erfindung die numerischen Daten der Flächenradien, der Linsendicken bzw. der Luftabstände (die durch n=1 gekennzeichnet sind) zwischen diesen Flächenradien und der Brechungsindices sowie der Abbe'schen Zahlen (für die d-Linie) der einzelnen Glasmaterialien angegeben.

Die angegebenen Daten sind jeweils auf ein bis zwei Stellen hinter dem Komma gerundet, tatsächlich sind die Daten natürlich mit einer höheren Genauigkeit gerechnet Die Radien und Abstände sind in Millimeter angegeben. Bei dieser Wahl der Daten ist das Relaislinsensystem insbesondere für ein Endoskop geeignet. Selbstverständlich sind aber auch andere Abmessungen möglich.

Ferner ist in der Figur der Strahlverlauf zwischen der Objektebene 13 und der Blendenebene 14 eingetragen.

## Tabelle 1

| Fläche | Radius | Dicke | Brechungsindex | Abbe'sche Zahl |
|---|---|---|---|---|
| 1 | 13,3 | | | |
| | | 26,66 | 1,85 | 23,8 |
| 2 | 8,04 | | | |
| | | 2,3 | 1,81 | 31,6 |
| 3 | − 14,4 | | | |
| | | 0 | 1 | |
| 4 | 14,4 | | | |
| | | 2,3 | 1,81 | 31,6 |
| 5 | − 8,04 | | | |
| | | 26,66 | 1,85 | 23,8 |
| 6 | − 13,3 | | | |

## Tabelle 2

| Fläche | Radius | Dicke | Brechungsindex | Abbe'sche Zahl |
|---|---|---|---|---|
| 1 | 12,38 | | | |
| | | 25,95 | 1,74 | 28,2 |
| 2 | 7,6 | | | |
| | | 3,1 | 1,70 | 38,6 |
| 3 | − 13,0 | | | |
| | | 0 | 1 | |
| 4 | 13,0 | | | |
| | | 3,1 | 1,70 | 38,6 |
| 5 | − 7,6 | | | |
| | | 25,95 | 1,74 | 28,2 |
| 6 | − 12,38 | | | |

## Tabelle 3

| Fläche | Radius | Dicke | Brechungsindex | Abbe'sche Zahl |
|---|---|---|---|---|
| 1 | 11,1 | | | |
| | | 24,5 | 1,62 | 36,3 |
| 2 | 4,2 | | | |
| | | 4,5 | 1,61 | 46,4 |
| 3 | −12,5 | | | |
| | | 0 | 1 | |
| 4 | 12,5 | | | |
| | | 4,5 | 1,61 | 46,4 |
| 5 | −4,2 | | | |
| | | 24,5 | 1,62 | 36,3 |
| 6 | −11,1 | | | |

## Tabelle 4

| Fläche | Radius | Dicke | Brechungsindex | Abbe'sche Zahl |
|---|---|---|---|---|
| 1 | 11,1 | | | |
| | | 28,1 | 1,62 | 36,3 |
| 2 | 6,9 | | | |
| | | 0,9 | 1,59 | 48,4 |
| 3 | −11,6 | | | |
| | | 0,01 | 1 | |
| 4 | 11,6 | | | |
| | | 0,9 | 1,59 | 48,4 |
| 5 | −6,9 | | | |
| | | 28,1 | 1,62 | 36,3 |
| 6 | −11,1 | | | |

Die vier Ausführungsbeispiele unterscheiden sich jeweils durch die Wahl der Glassorten. Bei dem in Tabelle 1 angegebenen Ausführungsbeispiel kommen ausschließlich Gläser mit einem Brechungsindex zum Einsatz, der größer als 1,8 ist. Die Verwendung ausschließlich hochbrechender Gläser ist beim Stand der Technik nicht möglich. Auch ist die Verwendung von Kittgliedern mit geringem Brechzahlunterschied, die aber aus Kron- bzw. Flintmaterialien bestehen und eine hervorragende Farbkorrektur ergeben, ist beim Stand der Technik nicht üblich.

Vorstehend ist die Erfindung anhand von Ausführungsbeispielen ohne Beschränkung des allgemeinen Erfindungsgedankens beschrieben worden, innerhalb dessen selbstverständlich die verschiedensten Modifikationen möglich sind:

So kann zwischen den beiden bikonvexen Linsen nicht nur ein kleiner Luftabstand wie beim vierten Ausführungsbeispiel, sondern auch ein größerer Luftabstand vorgesehen sein. Ferner ist es möglich, zwischen die bikonvexen Linsen eine planparallele Platte einzusetzen, die eine weitere Bildfehlerkorrektur ermöglicht.

Abschließend ist noch auf folgendes hinzuweisen: Aus Herstellungsgründen kann es erforderlich sein, die Stablinsen aus mehreren Teilen, beispielsweise einem langen zylindrischen Teil, einem plankonvexen und einem plankonkaven Teil, die an die Enden angekittet sind und aus dem gleigen Glasmaterial bestehen, zusammenzusetzen. Dies ist in der Figur der Zeichnung angedeutet. Selbstverständlich sind Linsensysteme, die derart hergestellte Glaslinsen aufweisen, vom Schutzbereich der Ansprüche erfaßt.

## Patentansprüche

1. Relaislinsensystem insbesondere für Endoskope oder dgl. mit zwei Stablinsen-Elementen (11) und zwei weiteren optischen Elementen (12,12′), die jeweils symmetrisch zu einer Mittelebene (14) angeordnet sind, wobei die Mittelebene (14) zwischen einer Objektebene (13) und einer Bildebene liegt, **gekennzeichnet** durch folgende Merkmale:
   – die Stablinsen-Elemente (11) sind konvex/konkave Einzellinsen, deren konkave Flächen (2) der Mittelebene (14) zugekehrt sind,
   – die weiteren Elemente (12, 12′) sind bikonvexe Einzellinsen,
   – die konkaven Flächen der Stablinsen-Elemente (11) sind jeweils mit einer der konvexen Flächen der weiteren optischen Elemente (12,12′) verkittet.

2. Linsensystem nach Anspruch 1,
dadurch **gekennzeichnet**, daß für die Abbe'sche Zahl $V_{ds}$ der Stablinsen (11) und die Abbe'sche Zahl $V_{dw}$ der weiteren Linsen (12) gilt:

$$V_{dw} - V_{ds} > 6 \text{ bevorzugt} > 10$$

3. Linsensystem nach Anspruch 1 oder 2,
dadurch **gekennzeichnet**, daß die weiteren Linsen (12, 12′) im Bereich ihres Flächenscheitels aufeinander aufliegen bzw. einen sehr kleinen Abstand haben.

4. Linsensystem nach Anspruch 1 oder 2,
dadurch **gekennzeichnet**, daß im Bereich der Mittelebene (14) des Linsensystems eine planparallele Platte vorgesehen ist, auf der die Flächenscheitel der weiteren Linsen aufliegen.

5. Linsensystem nach einem der Ansprüche 1 bis 4, dadurch **gekennzeichnet**, daß die folgende Bedingung erfüllt ist:

$$f'^*(\Theta_2 + \Theta_3 + \Theta_4) > 1$$

wobei bedeuten:
   $\Theta_2$ die Brechkraft der konkaven Fläche der stabförmigen Linse,
   $\Theta_3$ die Brechkraft der mit der konkaven Fläche verkitteten Fläche der weiteren Linse,
   $\Theta_4$ die Brechkraft der "gegen Luft gerichteten" Fläche der weiteren Linse, und
   f′ die Brennweite des aus diesen drei Flächen zusammengesetzten Systems.

6. Linsensystem nach einem der Ansprüche 1 bis 5, dadurch **gekennzeichnet**, daß folgende Bedingung erfüllt ist:

$$n_w < n_s$$

wobei bedeuten:
   $n_w$ der Brechungsindex der weiteren Linse, und
   $n_s$ der Brechungsindex der stabförmigen Linse.

7. Linsensystem nach Anspruch 6,
dadurch **gekennzeichnet**, daß gilt:

$$0{,}01 < (n_s - n_w) < 0{,}06$$

8. Linsensystem nach einem der Ansprüche 1 bis 7,
**gekennzeichnet** durch folgende Daten:

| Fläche | Radius | Dicke | Brechungsindex | Abbe'sche Zahl |
|---|---|---|---|---|
| 1 | 13,3 | | | |
| 2 | 8,04 | 26,66 | 1,85 | 23,8 |
| 3 | − 14,4 | 2,30 | 1,81 | 31,6 |
| 4 | 14,4 | 0 | 1 | |
| 5 | − 8,04 | 2,30 | 1,81 | 31,6 |
| 6 | − 13,3 | 26,66 | 1,85 | 23,8 |

9. Linsensystem nach einem der Ansprüche 1 bis 7,
**gekennzeichnet** durch folgende Daten:

gekennzeichnet durch folgende Daten:

| Fläche | Radius | Dicke | Brechungsindex | Abbe'sche Zahl |
|---|---|---|---|---|
| 1 | 12,38 | | | |
| 2 | 7,6 | 25,95 | 1,74 | 28,2 |
| 3 | − 13,0 | 3,1 | 1,70 | 38,6 |
| 4 | 13,0 | 0 | 1 | |
| 5 | − 7,6 | 3,1 | 1,70 | 38,6 |
| 6 | − 12,38 | 25,95 | 1,74 | 28,2 |

10. Linsensystem nach einem der Ansprüche 1 bis 7,
**gekennzeichnet** durch folgende Daten:

| Fläche | Radius | Dicke | Brechungsindex | Abbe'sche Zahl |
|---|---|---|---|---|
| 1 | 11,1 | | | |
| 2 | 4,2 | 24,5 | 1,62 | 36,3 |
| 3 | −12,5 | 4,5 | 1,61 | 46,4 |
| 4 | 12,5 | 0 | 1 | |
| 5 | −4,2 | 4,5 | 1,61 | 46,4 |
| 6 | −11,1 | 24,5 | 1,62 | 36,3 |

11. Linsensystem nach einem der Ansprüche 1 bis 7,
**gekennzeichnet** durch folgende Daten:

| Fläche | Radius | Dicke | Brechungsindex | Abbe'sche Zahl |
|--------|--------|-------|----------------|----------------|
| 1 | 11,1 | | | |
| | | 28,1 | 1,62 | 36,3 |
| 2 | 6,9 | | | |
| | | 0,9 | 1,59 | 48,4 |
| 3 | -11,6 | | | |
| | | 0,01 | 1 | |
| 4 | 11,6 | | | |
| | | 0,9 | 1,59 | 48,4 |
| 5 | -6,9 | | | |
| | | 28,1 | 1,62 | 36,3 |
| 6 | -11,1 | | | |

## Claims

1. Relay lens system, specifically for endoscopes or the like, comprising two rod - type lens elements (11) and two further optical elements (12, 12') each in symmetrical arrangement relative to a center plane (14) which is located between an object plane (13) and an image plane,
**characterized** by the following features:
   – the rod-type lens elements (11) are separate convex/concave lenses whose concave surfaces (2) face the center plane (14),
   – the further elements (12, 12') are separate bi-convex lens elements,
   – the concave surfaces of said rod- type lens elements (11) are each bonded to one of said convex surfaces of said further optical elements (12, 12').

2. Lens system according to Claim 1,
**characterized** in that the following relationship applies for the Abbe number $V_{ds}$ of said rod-type lenses (11) and for the Abbe number $V_{dw}$ of said further lenses (12):

$$v_{dw} - v_{ds} > 6 \text{ preferably } > 10.$$

3. Lens system according to Claim 1 or 2,
**characterized** in that said further lenses (12, 12') rest upon each other in the area of their surface verteces or are mutually spaced by a very small distance.

4. Lens system according to Claim 1 or 2,
**characterized** in that an optical flat is provided in the area of said center plane (14) of the lens system, with the surface apeces of said further lenses resting upon said flat.

5. Lens system according to any of Claims 1 to 4,
**characterized** in that the following condition is satisfied:

$$f'^*(\Theta_2 + \Theta_3 + \Theta_4) > 1$$

wherein:
   $\Theta_2$ is the refractive power of the concave surface of the rodshaped lens,
   $\Theta_3$ is the refractive power of the surface of said further lens, which is bonded to the concave surface
   $\Theta_4$ is the refractive power of the surface of said further lens, which "faces the atmosphere ", and
   f' is the focal distance of the system composed of these three surfaces.

6. Lens system according to any of Claims 1 to 5,
**characterized** in that the following condition is satisfied:

$$n_w < n_s$$

wherein:
   $n_w$ is the refractive index of the further lens, and
   $n_s$ is the refractive index of the rod-shaped lens.

7. Lens system according to Claim 6,
**characterized** in that the following relationship applies:

$$0.01 < (n_s - n_w) < 0.06$$

8. Lens system according to any of Claims 1 to 7,
**characterized** by the following data:

| Surface | Radius | Thickness | Refr.Index | Abbe No. |
|---------|--------|-----------|------------|----------|
| 1 | 13.3 | | | |
| | | 26.66 | 1.85 | 23.8 |
| 2 | 8.04 | | | |
| | | 2.30 | 1.81 | 31.6 |
| 3 | − 14.4 | | | |
| | | 0 | 1 | |
| 4 | 14.4 | | | |
| | | 2.30 | 1.81 | 31.6 |
| 5 | − 8.04 | | | |
| | | 26.66 | 1.85 | 23.8 |
| 6 | − 13.3 | | | |

9. Lens system according to any of Claims 1 to 7, **characterized** by the following data:

| Surface | Radius | Thickness | Refr.Index | Abbe No. |
|---------|--------|-----------|------------|----------|
| 1 | 12.38 | | | |
| | | 25.95 | 1.74 | 28.2 |
| 2 | 7.6 | | | |
| | | 3.1 | 1.70 | 38.6 |
| 3 | − 13.0 | | | |
| | | 0 | 1 | |
| 4 | 13.0 | | | |
| | | 3.1 | 1.70 | 38.6 |
| 5 | − 7.6 | | | |
| | | 25.95 | 1.74 | 28.2 |
| 6 | − 12.38 | | | |

10. Lens system according to any of Claims 1 to 7, **characterized** by the following data:

| Surface | Radius | Thickness | Refr.Index | Abbe No. |
|---------|--------|-----------|------------|----------|
| 1 | 11.1 | | | |
| | | 24.5 | 1.62 | 36.3 |
| 2 | 4.2 | | | |
| | | 4.5 | 1.61 | 46.4 |
| 3 | − 12.5 | | | |
| | | 0 | 1 | |
| 4 | 12.5 | | | |
| | | 4.5 | 1.61 | 46.4 |
| 5 | − 4.2 | | | |
| | | 24.5 | 1.62 | 36.3 |
| 6 | − 11.1 | | | |

11. Lens system according to any of Claims 1 to 7, **characterized** by the following data:

| Surface | Radius | Thickness | Refr.Index | Abbe No. |
|---------|--------|-----------|------------|----------|
| 1 | 11.1 | | | |
| | | 28.1 | 1.62 | 36.3 |
| 2 | 6.9 | | | |
| | | 0.9 | 1.59 | 48.4 |
| 3 | − 11.6 | | | |
| | | 0.01 | 1 | |
| 4 | 11.6 | | | |
| | | 0.9 | 1.59 | 48.4 |
| 5 | − 6.9 | | | |
| | | 28.1 | 1.62 | 36.3 |
| 6 | − 11.1 | | | |

**Revendications**

1. Système de lentilles de relais, en particulier pour des endoscopes ou instruments similaires, or comprenant deux éléments de lentille en bâton (11) et deux autres éléments optiques ( 12, 12') dont chacun est disposé symétriquement à un plan médian (14) situé entre un plan d'objet (13) et un plan d'image,
**caractérisé** par les caractéristiques suivantes:

– les éléments de lentille en bâton (11) sont des lentilles convexes/concaves individuelles dont les aires concaves (2 ) sont tournées vers le plan médian (14),

– les autres éléments (12, 12') sont des éléments de lentille biconvexes,

– les aires concaves desdits éléments de lentille en bâton (11) sont cimentés à une desdites aires convexes desdits autres éléments optiques (12, 12').

2. Système de lentilles selon la revendication 1,
**caractérisé** en ce que la relation suivante s'y applique pour les coefficients selon Abbe $V_{ds}$ desdites lentilles en bâton (11) et pour les coefficients selon Abbe $V_{dw}$ desdites autres lentilles (12):

$$v_{dw} - v_{ds} > 6 \text{ de préférence } > 10.$$

3. Système de lentilles selon la revendication 1 ou 2,
**caractérisé** en ce que lesdites autres lentilles (12, 12') reposent l'une sur l'autre dans la zone de leurs sommets de surface ou qu' ellest sont séparées l'une de l'autre par une très petite distance.

4. Système de lentilles selon la revendication 1 ou 2,
**caractérisé** en ce qu'une plaque à faces planes et parallèles est disposée dans la zone du plan médian (14) du système de lentilles, les sommets de surface desdites autres lentilles reposant sur ladite plaque.

5. Système de lentilles selon une quelconque des revendications 1 à 4,
**caractérisé** en ce que la condition suivante est satisfaite:

$$f'^{*}(\Theta_2 + \Theta_3 + \Theta_4) > 1$$

dans laquelle:

$\Theta_2$ est la puissance de réfraction de l'aire concave de la lentille en bâton,

$\Theta_3$ est la puissance de réfraction de l'aire de l'autre lentille, qui est cimentée à ladite aire concave,

$\Theta_4$ est la puissance de réfraction de l'aire de ladite autre lentille, qui est tournée "vers l'atmosphère", et

f' est la distance focale du système composé par cettes trois aires.

6. Système de lentilles selon une quelconque des revendications 1 à 5,
**caractérisé** en ce que la condition suivante est satisfaite:

$$n_w < n_s$$

dans laquelle:

$n_w$ ets l'indice de réfraction de l'autre lentille, et

$n_s$ ets l'indice de réfraction de la lentille en bâton.

7. Système de lentilles selon la revendication 6,
**caractérisé** en ce que la relation suivante s'y applique:

$$0.01 < (n_s - n_w) < 0.06$$

8. Système de lentilles selon une quelconque des revendications 1 à 7,
**caractérisé** par les données suivantes:

| Aire | Rayon | Epaisseur | Ind.de réf. | Coeff.Abbe |
|------|-------|-----------|-------------|------------|
| 1 | 13.3 | | | |
| | | 26.66 | 1.85 | 23.8 |
| 2 | 8.04 | | | |
| | | 2.30 | 1.81 | 31.6 |
| 3 | – 14.4 | | | |
| | | 0 | 1 | |
| 4 | 14.4 | | | |
| | | 2.30 | 1.81 | 31.6 |
| 5 | – 8.04 | | | |
| | | 26.66 | 1.85 | 23.8 |
| 6 | – 13.3 | | | |

9. Système de lentilles selon une quelconque des revendications 1 à 7,
**caractérisé** par les données suivantes:

| Aire | Rayon | Epaisseur | Ind.de réf. | Coeff.Abbe |
|------|-------|-----------|-------------|------------|
| 1 | 12.38 | | | |
| | | 25.95 | 1.74 | 28.2 |
| 2 | 7.6 | | | |
| | | 3.1 | 1.70 | 38.6 |
| 3 | − 13.0 | | | |
| | | 0 | 1 | |
| 4 | 13.0 | | | |
| | | 3.1 | 1.70 | 38.6 |
| 5 | − 7.6 | | | |
| | | 25.95 | 1.74 | 28.2 |
| 6 | − 12.38 | | | |

10. Système de lentilles selon une quelconque des tions 1 à 7, **caractérisé** par les données suivantes:

| Aire | Rayon | Epaisseur | Ind.de réf. | Coeff.Abbe |
|------|-------|-----------|-------------|------------|
| 1 | 11.1 | | | |
| | | 24.5 | 1.62 | 36.3 |
| 2 | 4.2 | | | |
| | | 4.5 | 1.61 | 46.4 |
| 3 | − 12.5 | | | |
| | | 0 | 1 | |
| 4 | 12.5 | | | |
| | | 4.5 | 1.61 | 46.4 |
| 5 | − 4.2 | | | |
| | | 24.5 | 1.62 | 36.3 |
| 6 | − 11.1 | | | |

11. Système de lentilles selon une quelconque des tions 1 à 7, **caractérisé** par les données suivantes:

| Aire | Rayon | Epaisseur | Ind.de réf. | Coeff.Abbe |
|------|-------|-----------|-------------|------------|
| 1 | 11.1 | | | |
| | | 28.1 | 1.62 | 36.3 |
| 2 | 6.9 | | | |
| | | 0.9 | 1.59 | 48.4 |
| 3 | − 11.6 | | | |
| | | 0.01 | 1 | |
| 4 | 11.6 | | | |
| | | 0.9 | 1.59 | 48.4 |
| 5 | − 6.9 | | | |
| | | 28.1 | 1.62 | 36.3 |
| 6 | − 11.1 | | | |